# EUROPEAN PATENT APPLICATION

(11) **EP 2 333 713 A1**
(43) Date of publication of application: **15.06.2011**
(21) Application number: 09425484.4
(22) Date of filing: 26.11.2009
(51) Int. Cl.: G06Q 40/00

(54) **Method , system and information technology product for collecting funds for a non-profit organization**

(71) Applicant: Intesa Sanpaolo S.p.A., 10121 Torino (TO) (IT)
(72) Inventor: Morganti, Marco, 50100 Firenze (FI) (IT)
(74) Representative: Ciceri, Fabio

(57) **Abstract**

The present invention relates to a method, a system and an information technology product for collecting funds for a non-profit organization (10) by means of a fund-collection program managed by an intermediary (11), the funds being given by one or more donors (13), The method comprises the steps of storing one or more projects (14a, 14b, 14c) having social aims in a first server (6, 7) which is in signal communication with a computer network (5), providing a communication interface (9) which is in signal communication with the first server (6, 7) by means of the computer network (5), the interface (9) being configured to interact by means of one or more electronic devices (2, 3,4) of the at least one donor (13), selecting, by means of the communication interface (9), at least one of the projects (14a, 14b, 14c) having social aims proposed by a first non-proilt organization (10), and receiving one or more sums of money (18b) given by the at one donor (13) for the project (14a, 14b, 14c) having social aims selected, by means of the communication interface (9), A characteristic of the method is that it comprises the further steps of: aggregating the sums of money (18b) given by the at one donor (13) for the selected project (14a_{,} 14b, 14c) having social aims, checking whether the aggregated amount (S) of the sum of money is equal to or greater than a predetermined threshold value (Vth), and checking whether the predetermined threshold value (Vth) is reached within a predefined period of time (T).

## Description

The present invention relates to a fund-collecting method, system and information technology product, in particular but not exclusively, to a method, a system and an information technology product for collecting funds for a non-profit organization by means of a fund-collection program, according to the preambles to Claims 1, 16 and 17, respectively.

More specifically, the present invention relates to a fund-collection method, system and information technology product managed (and optionally owned) by an intermediary.

For non-profit organizations or charitable bodies, the ability to implement their projects fully and to fulfil their mission involves seeking and collecting the funds necessary to operate with adequate means.

To achieve this objective, non-profit organizations devote themselves to fund-collection or "fundraising" activities but this cannot consist solely of mere fund-collection, for example, as is performed by "direct marketing" techniques or similar models but must also take the form of a search for economic and financial support, both public and private, of various kinds, directed towards the creation of a mix of financing sources which is necessary for the support of non-profit organizations and for the responsible, economic and transparent management of such financing.

Nowadays, anyone who gives money to non-profit organizations, be it an individual citizen, an organisation, a company or a public administrative body, hereinafter referred to as a donor or investor, decides to make a social investment which, as such, must be efficient and effective.

In the current state of the art, various methods and/or systems have been proposed to satisfy the above-mentioned needs but none is free of drawbacks.

For example, one of the drawbacks of the above-mentioned methods and/or systems lies in the fact that donors are not aware of the amount that is required to complete the project proposed by the non-profit organization and do not know if the organization decides to publicize a single project or a precise fund-collection objective.

Moreover, another drawback is that donors do not know the time required by the non-profit organization to complete the project and, above all, they do not know how much of the donated funds will actually be used for the project proposed.

In effect, with the methods and/or systems proposed up to now, the donor is not informed about how much time is needed to conclude the project, what date may be envisaged for concluding the project, or what amount is required to complete the project.

Another drawback of the known methods and/or systems lies in the fact that the donor chooses to give his sum of money without having been able to evaluate or see an independent evaluation undertaken by a third party in relation to the historical capacity of the non-profit organization to complete the projects it has proposed and, in general, to the self-sustainability of the non-profit organization.

In effect, up to now, the donor has not been able to have information concerning the actual capability demonstrated by the non-profit organization in the use of the sum of money intended for carrying out the projects proposed.

In view of the prior art described, the objective of the present invention is to provide a method, a system and an information technology product which facilitate the collection of funds by non-profit organizations.

According to the present invention, this objective is achieved by means of a method, a system and an information technology product for raising funds for the benefit of a non-profit organization according to Claims 1, 16 and 17, respectively.

The present invention provides a method which develops fund-collection capacity irrespective of the donor's location and which increases the level of responsibility of the non-profit organization with respect to citizens who, believing in the organization's social mission, contribute financially to its support.

By virtue of the present invention, it is also possible to finance social undertakings and voluntary projects proposed by non-profit organizations.

Moreover, by virtue of the present invention, it is possible to aggregate or combine the funds given by various donors by means of one or more of the fund-collection types that are provided for with respect to a specific project so as to reduce the time taken to reach the amount of money required to implement the selected project.

According to one aspect of the present invention, the method, the information technology product and the system are managed by an intermediary which preferably takes the form of a financial body or a financial institution, that is, of a company which is authorized to receive money on deposit and to lend monkey.

By virtue of the present invention, it is also possible to evaluate the historical capacity of a non-profit organization by the introduction of a merit index, for example, by means of a merit index worked out by an independent rating company.

The characteristics and advantages of the present invention will become clear from the following detailed description of a practical embodiment which is illustrated by way of nonlimiting example in the appended drawings, in which:
Figure 1 shows schematically a system for collecting funds for a non-profit organization by means of a fund-collection program managed by an intermediary in accordance with an aspect of the present invention,
Figure 2 shows a screen-shot of a possible embodiment of a web page of the information technology product implemented in the system of Figure 1, in accordance with an aspect of the present invention,
Figure 3 is a flow diagram illustrating the method implemented by the information technology product of Figure 2, in accordance with an aspect of the present invention.

With reference to the appended drawings, a system, generally indicated 1, comprises a communication interface 9 by means of which a fund-collection program managed by an intermediary 11 can be implemented.

The fund-collection program enables at least one donor 13 to give funds to finance at least one project 14a, 14b, 14c, having social aims which is managed by a non-profit organization 10.

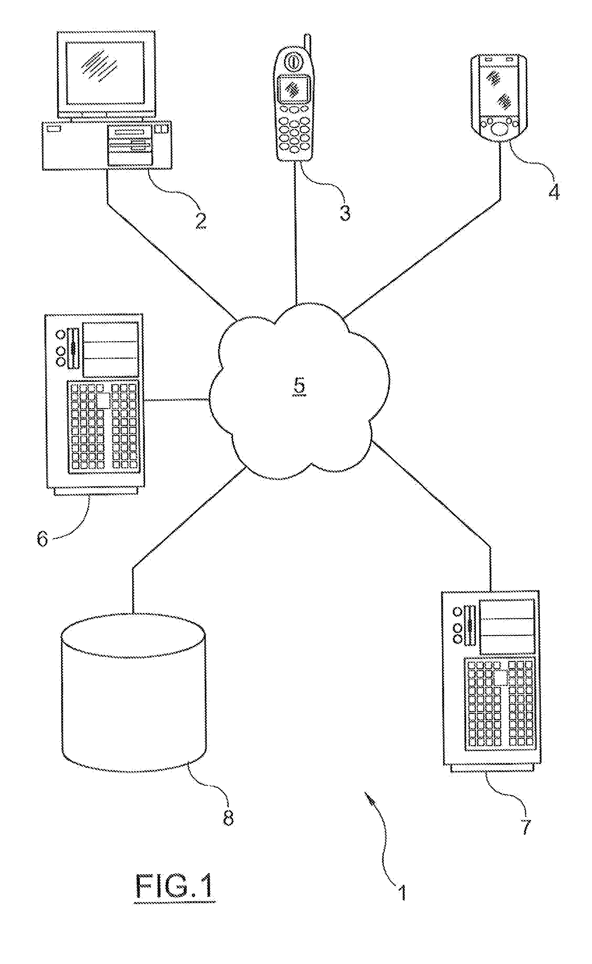

For this purpose, the system 1 may comprise one or more electronic devices 2, 3 and 4 of the donor or donors 13 which, for purely illustrative purposes, are shown in Figure 1 as a personal computer 2, a mobile phone 3, and a hand-held computer 4.

It should be pointed out that the electronic devices 2, 3 and 4 may comprise any device which can establish a voice and/or data signal communication.

For example, the devices 2, 3 and 4 of the donor/s 13 may include a generic personal computer 2 including personal computers and/or portable computers with Microsoft Windows and/or Apple Corp's Macintosh O.S.(operating system), etc. and/or a workstation with an O.S. such as a Unix or Unix-like system.

Alternatively, the device 2, 3 our 4 may be any other electronic device such as a this-client computer, a POTS telephone, a wireless telephone (for example, of the type indicated 3), an Internet-enabled cell phone, or a hand-held computer and/or personal digital assistant PDA (for example, of the type indicted 4), which can establish a voice and/or data communication.

The voice and/or data communication may take the form, purely by way of example, of a communication by means of a computer network 5, a telephone network, or the display and navigation of WEB pages and/or electronic documents of other types.

The devices 2, 3 and 4 of the donor/s 13 may also be provided, according to their capabilities, with a plurality of applications, amongst which may be mentioned one or more client databases, server applications and/or web browser applications.

Although the system 1 is shown with only three devices 2, 3 and 4, naturally any number of devices may be used.

The system 1 is preferably implemented by means of a communication network 5.

The communication network 5 may be of any type known to persons skilled in the art.

The communication network 5 is, for example, designed to support data and/or voice communication with the use of any one of the many commercial available communication protocols such as, for example TCP/IP, SNA (Systems Network Architecture), IPX (Internetwork Packet Exchange), AppleTalk, and so on.

Purely by way of example, the communication network 5 may be a local network (LAN) including, for example, an Ethernet or Token-Ring network and/or the like, a wide-area network, a virtual network such as, for example, a virtual private network (VPN), the Internet, an intranet, an extranet, a telephone network such as, for example, a public switched telephone network (PSTN), a wireless telephone network, a switchboard (PBX) and/or the like, an infra-red network, a wireless network including, without limitation, a communication network implemented in accordance with any one of the IEEE 802.11 protocol specifications, such as, for example, the Bluetooth protocol, and/or any other wireless communication network and/or any combination of these and/or of other communication networks.

The system 1 may also comprise one or more digital processing devices 6, 7 also known as server computers or servers, which can act as data-processing systems.

The servers 6, 7 comprise all the electrical and electronic devices necessary for their operation and for their interconnection with the network 5 and are known to persons skilled in the art and are therefore not described.

By way of example, each of the servers 6, 7 comprises one or more processors, one or more memory banks, one or more input/output communication cards, one or more mass storage devices, etc.

Again by way of example, the server 6 may be a web server which can be used for processing the requests for web pages or other electronic documents generated by the devices 2, 3 and/or 4 of the donor/s 13.

Each server 6, 7 has its own operating system O.S., for example, of the type listed above and the above-mentioned one or more processors can execute the instructions provided for by the O.S. or by other information technology products resident locally and/or remotely; other server operating systems amongst those that are commercially available may be adopted, amongst which the following may be listed, purely by way of example: OS/390, OS/400, VMS, UNIX and the like.

The servers 6, 7 may also be able to execute a wide range of server application including server HTTP, server FTP, server CGI, server database, Java and so on.

The servers 6, 7 may also implement one or more server files, server applications and/or transaction-processing server applications which, in addition to the operating system O.S., comprise one or more applications that can be accessed by a client running on one or more of the devices 2, 3 and/or 4 of the donor/s 13.

Purely by way of example, the servers 6, 7 may be one or more generic personal computers which can run programs or script in response to requests and/or interaction with the devices 2, 3 and/or 4, such as, for example, WEB applications.

It should be pointed out that the WEB applications may be implemented as one or more scripts or programs written in any programming language, for example, by means of Java, C, C++, or any other scripting language such as Perl, Python, or TCL, or any combination thereof.

The servers 6, 7 may also comprise database servers such as, for example, those available commercially from Oracle, Microsoft, Sybase, IBM, and the like. These database servers can process the requests of the database clients running on a device, for example, of the type indicated 2, of the donor/s 13.

In one embodiment, the servers 6, 7 can create dynamic WEB pages to implement the method of the present invention.

These dynamic WEB pages can act as a communication interface between the devices 2, 3 and/or 4 and the servers 6, 7.

Alternatively, a server 6, 7 may run a server application whilst a device of the donor 13 may run a dedicated client application. The server application can therefore serve as an interface for the donor's device running the client application.

The system 1 may also comprise a database or mass storage means 8. The place in which the database 8 is actually kept or arranged is an aspect which depends on the type of system 1 to be implemented.

For example, the database 8 may reside on a local storage substrate provided in one or more of the devices 2, 3 and/or 4 of the donor/s 13.

Alternatively, the database 8 may be remote from the devices 2, 3 and/or 4 since it may be in communication, for example, by means of the communication network 5, with one or more of the devices 2, 3 and/or 4 and/or with the servers 6, 7.

Alternatively, the database 8 may reside in a storage-area network (SAN) arranged outside the servers 6, 7 and/or implemented inside the servers 6, 7, in accordance with techniques well known to persons skilled in the art.

Alternatively, the database 8 may be a relational database, that is, a database suitable for the archiving, updating and recovery of the data in response to commands in SQL format.

It should be pointed out that at least one of the servers mentioned above (for example, that indicated 6) is suitable for executing the steps of the method to facilitate the collection of funds given by the donor 13, which funds are given for the benefit of one or more non-profit organizations 10.

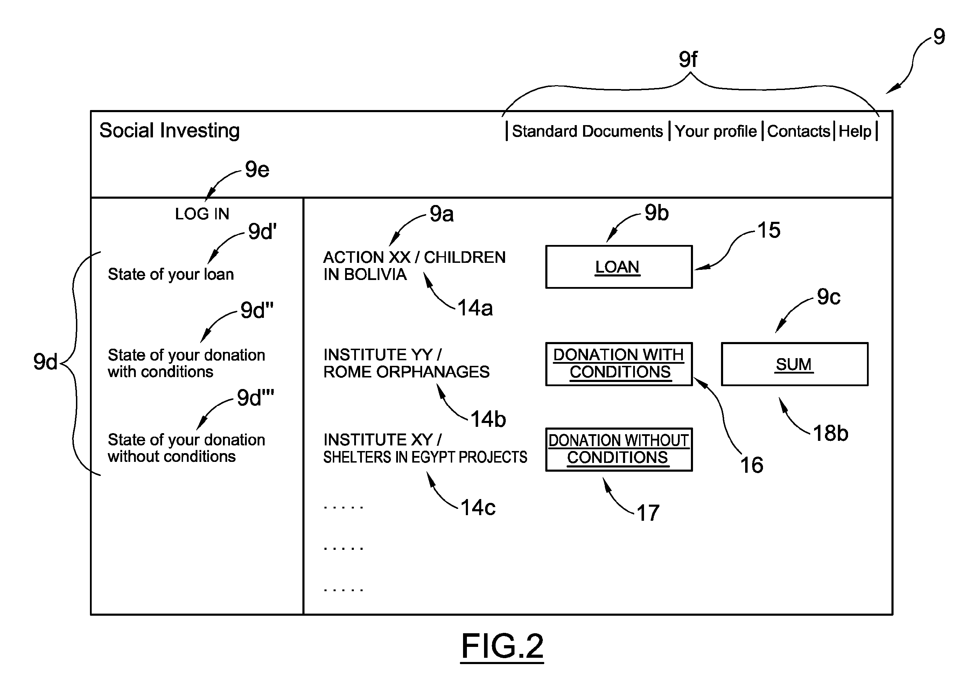

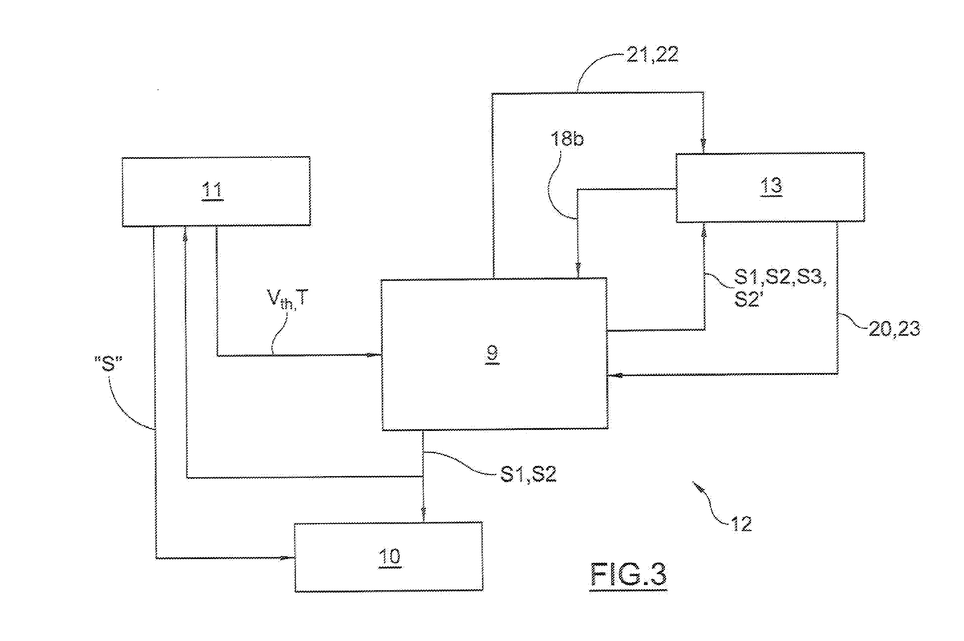

The steps of the method which will be described with reference to Figures 2 and 3, can advantageously be implemented by means of an information technology product.

The information technology product comprises portions of program code which can be loaded directly into one or more of the memory banks of the server 6.

With reference now to Figures 2 and 3, in the screen-shot of Figure 2, of the communication interface 9, it will be noted that, as well as generic functions that are normally available on a web page (for example, a section 9e suitable for executing a log-in step, a section 9f suitable for providing generic information to donors, etc.) the communication interface 9 comprises one or more of the following sections and, in particular:
- a section 9a suitable for displaying one or more projects 14a, 14b, 14c having social aims;
   each of these projects 14a, 14b, 14c is managed by a non-profit organization 10, for example, the non-profit organization "Action XX" is working for project 14a "Children in Bolivia", the non-profit organization "Institute YY" is working for project 14b "Orphanages in Rome" and the non-profit organization "Institute XY" is working for project 14c "Shelters in Egypt";
- a section 9b suitable for displaying the various fund-collection types 15, 16, 17 provided for by the method according to an aspect of the present invention; for example, a type available to the donor 13 may be a loan 15, a contribution with conditions 16 and/or a contribution without conditions 17;
- a section 9c suitable for displaying the sum of money 18b given by the donor 13.

It should be pointed out that:
- by means of section 9a, the donor/s 13 can select the project or projects 14a, 14b, 14c having social aims which they wish to finance, from those displayed on the communication interface 9;
- by means of the section 9b, the donor/s 13 can select, for each project 14a, 14b, 14c having social aims, one of the possible fund-collection types 15, 16 and/or 17, from those displayed on the communication interface 9, and
- by means of the section 9c, the donor/s 13 can give their sum of money 18b, which may be unrestricted, since there are no restrictions on the minimum sum or, alternatively, may be restricted to a minimum sum, for example of €25.

In particular, by means of section 9a, it is also possible to provide donors 13 with information relating to the projects 14a, 14b, 14c having social aims, such as, for example, the location in which the social project is to be carried out, the aim of the social project, the current situation in the absence of the project or the situation if the project were implemented, the period of time "t" envisaged for the implementation of the project, the sum of money "Vth" necessary to complete project, etc.

In one embodiment of the present method, the fund-collection type 15, 16 and/or 17 comprises one or more of the following types;
- a "contribution with conditions" fund-collection type 16 such as, for example, a contribution to a series of projects selected from the projects 14a, 14b, 14c displayed;
- a "contribution without conditions fund-colleetion type 17 such as, for example, a conventional contribution/donation to a single project selected from the projects displayed 14a, 14b, 14c;
- a "loan" fund-collection type 15 such as, for example, a financing of a project selected from the projects 14a, 14b, 14c displayed, optionally with indication by the donor 13 of the interest rate he wishes to receive, as explained in further detail in the following part of the description.

In other words, when the donor 13 has selected the project (for example, the project 14a), he can select by which type of fund-collection he intends to finance it (for example, the "loan" financing type 15).

The communication interface 9 may comprise a further section 9d which can display information 9d', 9d" and 9d"' relating to the state of the funds given by each donor 13.

In fact, by means of the section 9d, it is also possible make the donor/s 13 aware of the state of:
- the loan 9d' given by means of the loan fund-collection type 15,
- the contribution with conditions 9d" given by means of the contribution with conditions fund-collection type 16 and/or
- the contribution without conditions 9d"', given by means of the contribution without conditions fund-collection type 17.

The communication interface 9 is preferably a dynamic web page and is stored in the mass storage means, for example, implemented in the server 6.

The communication interface 9 is configured to interact with the devices 2, 3 and/or 4 of the donor/s 13.

In other words, the donors 13 access the communication interface 9 with the use of one or more of their own devices 2, 3 and/or 4.

The communication interface 9 thus acts as a shop window in which the various projects 14a, 14b, 14c having social aims of each non-profit organization 10 are displayed so as to promote the spread of information relating to the projects and facilitate the collection of the funds within a redefined period of time "T".

In particular, the predefined period "T" corresponds to the period for which the projects 14a, 14b, 14c having social aims are displayed or remain on the communication interface 9.

In other words, the period "T" indicates for how long the projects 14a, 14b, 14c are visible to donors 13 who access the communication interface 9 by means of their devices 2, 3 and/or 4.

The method may comprise the step of storing one or more of the projects 14a, 14b, 14c in the server 6 and/or 7, for example, in the server 6, which may correspond to the server which is managed directly by the intermediary 11.

The storage phase consists in the storage, in the mass storage means, for example, of the server 6, of the information relating to the projects 14a, 14b, 14c having social aims.

Amongst the information relating to the projects 14a, 14b, 14c having social aims that is stored may be, for example, the information 9d', 9d", and 9d"', the information described with reference to section 9a (the location in which the social project is carried out, the aim of the social project, the current situation in the absence of the project, or the situation if the project were implemented) and/or the generic information described with reference to section 9e and section 9f

The method may also comprise the further steps of:
- selecting, by means of the communication interface 9, at least one of the projects 14a, 14b, 14c having social aims, and
- receiving a sum of money 18b given by at least one or more donors 13 for the project having social aims selected.

In particular, once the donor 13 has registered himself by means of section 9e of the communication interface 9, he selects a project (for example, the project 14a) and decides to give a sum of money 18b. Another donor 13 may select the same project (for example, the project 14a) and give a sum equal to or different from that given by the first donor.

Other donors may be interested in the same project (for example, the project 14a) and therefore also give their own sums of money.

It should be pointed out that the sum of money 18b given by each donor 13 to the same project selected is not known to the other donors.

In a preferred embodiment, each donor l3 selects one of the above-mentioned possible fund-collection types 15, 16 and/or 17 for financing the selected project having social aims (for example, the project 14a, financing it by the loan fund-collection type 15).

Other donors 13 may select another project having social aims (for example, the project 14b) to which to give the funds and each of the other donors 13 who have selected that specific project (for example, the project 14b) can select one of the possible fund-collection types 15, 16 and/or 17.

The method advantageously comprises the step of aggregating the funds given by the donors 13 so as to obtain an aggregated amount "S" of money for the selected project having social aims.

This step thus consists in the adding-up of all of the sums of money 18b given by every donor 13 for that specific selected project having social aims (for example, the first project 14a selected.), irrespective of the fund-conection type 15,16 and/or 17 selected.

The adding-up or aggregation of the sums 18b given for the specific selected projects having social aims (for example, the first project 14a selected) gives the amount "S".

The same also takes place for the other selected projects having social aims (for example, the projects 14b and/or the project 14c).

The method further comprises the steps of:
- checking whether the aggregated amount "S" of the sum of money given 18b is equal to or greater than the predetermined threshold value Vth, and
- checking whether the predetermined threshold value Vth has been reached within the period of time "T".

In other words, the method provides for the adding-up of all of the sums 18b given by every donor 13 for the same project selected so as to obtain the aggregated amount "5" and the comparison of the value "S" with the amount of money Vth, necessary to complete the selected project, and checking whether the value "S" has been reached within the period "T" indicated for each project selected.

The threshold value Vth indicates, except for a marginal percentage, the amount of money that is required to complete the project and is known to the donor 13, since it is displayed by means of section 9a of the communication interface 9.

The time T, on the other hand, indicates the period of time during which the project having social aims is visible to the donor/s 13 by means at the communication interface 9.

The predefined period of time T can be equal to or less than two months.

It should be pointed out that the predetermined threshold value Vth and the predefined period of time T are preferably selected by the intermediary 11 according to each project 14a, 14b and 14c or, alternatively, the predetermined threshold value Vth and the predefined period of time T may be selected by the non-protit organizations 10.

The method comprises the further step of creating one or more accounts, preferably but not exclusively, fixed deposit accounts (not illustrated in the drawings) to be associated with the project/s 14a, 14b, 14c having social aims.

In a preferred embodiment, a respective account can be associated with each project 14a, 14b, 14c having social aims.

For example, the information relating to the account/s are kept in a mass memory of the server 6.

In other words, in the preferred embodiment, for each project 14a, 14b, 14c, there is an account, preferably a fixed-deposit account, the balance of which is not freely available to the non-profit organization 10 responsible for that specific project but is subject to the occurrence of conditions according to which the aggregated amount "S" is equal to or greater than the threshold value Vth and the threshold value Vth is reached within the period of time "T" displayed.

In one embodiment of the present method, if the aggregated amount of money "S" is equal to or greater than the predetermined threshold value Vth (plus or minus a marginal percentage) and if the threshold value Vth is reached within the period of time T, then the method comprises the further step of sending a signal S1 to each of the donors 13 who have participated in the contribution of funds for that specific project and/or to the non-profit organization 10 which is responsible for managing that project and bringing it to completion and/or to the intermediary 11, to enable the section 9d of the communication interface 9 to be updated.

In particular, in one embodiment, the signal S1 is arranged to be displayed by means of one or more of the sections 9a, 9b, 9c and/or 9d of the communication interface 9.

The signal S 1 thus indicates the fact that the threshold value Vth has been reached within the display period "T".

If the aggregated sum of money "S" is equal to or greater than the predetermined threshold value Vth and if the threshold value is reached within the display period "T", then the method advantageously also comprises the step of transferring that amount of money "S", by means of the computer network 5, for example, by means of an https encrypted data transfer (Hypertext Transfer Protocol over Secure Socket Layer) to the fixed deposit account associated with the specific project selected.

This ensures the immediate availability of the amount of money "S" to the non-profit organization 10 so that the specific project having social aims which is financed can be carried out.

It should be pointed out that the non-protit organization 10 which manages the step of the financing of the project by means of the fund-collection program can in turn make use of another non-profit organization in order actually to carry out the project. In other words, the organization which manages the collection may not correspond to the non-profit organization which is concerned with implementing the project financed.

Before the aggregated amount of money "S" is transferred to the fixed deposit account of the non-profit organization 10 managing the project which is financed by the donor/s 13, the donor is therefore made aware of the state of progress of his donation by means of the section 9d.

The donors 13 are advantageously always informed about the likelihood of their contribution actually being made available to the non-profit organization within the display period "T".

In particular, in one embodiment, the signal S1 is displayed by means of one of the sections 9a, 9b 9c and/or 9d of the communication interface 9,

When the aggregated amount of money "S" is not equal to the predetermined threshold value Vth but is below the amount Vth by a value Δ, which is preferably equal to no more than 30% (that is, for example, if the threshold value Vth is 100, the value Δ is at most 30 and the aggregate amount S is equal to or greater than 70), then the method optionally provides for the non-profit organization 10 to try to obtain the value Δ, in order to reach the threshold Vth, by turning to the open market.

The method provides for another signal S2 to be sent to each donor 13 and/or to the non-profit organization 10 and/or to the intermediary 11 to indicate the failure to reach the threshold value Vth within the period of time T and, at the same time, to inform them that there is a possibility of reaching the threshold Vth.

In this situation, the intermediary 11 may also intervene and may be disposed to donate the amount Δ in order to reach the threshold Vth so as to be able to finance the project fully.

The intermediary 11 can thus act as a fund donor if the non-profit organization 10 requests the collection of the amount Δ which is lacking in order to reach the value Vth also from other persons who have not been able or wished to participate in the fund-collection program performed by means of the interface 9.

However, in the situation in which the aggregate sum of money "S" is less than or equal to the threshold value Vth by a value Δ' which is preferably greater than 30% (that is if, for example, the threshold value Vth is 100, then the aggregated amount of money S is equal to or less than 70 and the value Δ' is therefore greater than 30), a further signal S2' is sent to each of the donors 13 and/or to the non-profit organization 10 and/or to the intermediary 11.

The method provides for the signal S2' to be sent to each donor 13 and/or to the non-profit organization 10 and/or to the intermediary 11 to indicate the failure to reach the threshold value Vth within the period of time T.

If the aggregated amount of money "S" is less than or equal by the vague Δ' and/or the threshold value Vth is not reached within the period of time T, then the method comprises the step of returning the amount of money "S" received, breaking it down into the sums of money 18b given by each donor 13.

In other words, the amount of money collected is divided into parts such as to correspond to the sums of money that were given by each donor 13, so as to return the sums of money to the legitimate donors.

In order to donate the sums of money 18b or to return them in the situations provided for, the method may also provide for the donor 13 to supply, by means of the communication interface 9, at least one identification code 20 of an electronic cash medium belonging to him (not illustrated in the drawings).

For example, the electronic cash medium takes the form of a credit card, a debit card, a prepaid card, a ATM card and/or the banking codes (IBAN) of a current account in his name.

The electronic cash medium, in any of its possible embodiments, enables the donor to be identified with certainty.

As well as representing an advantage from the point of view of the identification of personal details of the donor 13, this also enables the funds to be reimbursed when the above-mentioned conditions are not satisfied.

It should be pointed out that the identification code 20 is provided by means of the computer network 5, between the first server 6 and the second server 7.

In particular, the connection by means of which the identification code 20 is provided is a cryptographic connection, for example, in accordance with the https protocol,

For example, further mass storage means, in which the identification data 20 of the electronic cash medium of the donor 13 can be kept, are provided in the second server 7.

Alternatively, the sum of money 18b may be supplied by the donor 13 by means of a bank transfer.

The method also comprises the further step of issuing to the donor 13, by means of the communication interlace 9, a first form 21 which illustrates to the donor 13 the possible fund-collection types 15, 16 and/or 17 for financing or donating funds to one or more of the projects 14a, 14b, 14c having social aims.

When the donor 13 selects the "contribution with conditions" financing type 16, the method may also comprise one of the following further steps:
- selecting at least one further non-profit organization 10 other than the non-profit organization which manages the project having social aims previously or already selected,
- creating a list (not shown in the drawings) comprising a plurality "n" of further non-profit organizations 10 to which it is wished to give the funds so as to finance the projects having social aims managed by each of the said "n" further non-profit organizations 10.

In particular, the communication interface 9 permits the creation of a list which contains, in addition to the project having social aims managed by a first non-profit organization (for example, the project 14a of the non-profit organizations "Action XX"), also a further plurality "n" of names of further non-profit organizations to be financed (for example, "Institute XY" and "Institute YY").

This list is stored, for example, in the database located in the first server 6.

The list may be based on the ethical motivations of each donor 13 and/or on the historical capability of the non-profit organizations to complete projects.

In particular, the further non-profit organizations to be financed (for example, "Institute XY" and "Institute YY") are other than the non-profit organization which manages the first project having social aims selected.

It should be pointed out that each donor 13 who selects the fund-collection with conditions type 16 can create his own list, and each list may differ from the other lists created in the composition of the projects selected, the sum of money given, and/or the non-profit organizations selected,

An ordered list is thus created which comprises both the project having social aims selected (for example, the project 14a managed by the non-profit organization "Action XX") and the number "n", for example three, of further non-profit organizations to be financed (for example, after the project selected, there arc, in second position "Institute YY", in third position "Institute XY", and in fourth position "Action YY").

In particular, by virtue of the creation of the list, once the project first selected (for example, the project 14a), and for which the donor/s 13 have given the sum/s of money 18b, is completed, the method may also comprise the step of transferring the sum/s of money 18b into another fixed deposit account which is associated with a non-profit organization following the first one. For example, the step of transferring the sum/s of money 18b provides for transfer to the non-profit organization which appears as second (for example, "Institute YY") on the list provided by the donor 13.

Once one of the projects managed by the second non-profit organization is completed, the sum/s of money 18b initially given by the donors 13 are transferred to a further fixed deposit account of another non-profit organization (for example, the third, that is, "Institute XY").

For this purpose, once the non-profit organization 10 which manages the first project (for example, 14a) has completed the projects, it must transfer the aggregated amount of money "S" directly to the non-profit organization immediately following it on the list.

The project having social aims which is managed by the second non-profit organization (for example, "Institute YY") will thus be given the aggregated sum of money "S" transferred by the first non-profit organization.

The threshold value Vth specific to the project having social aims which is managed by the second non-profit organization (for example "Institute YY"), will thus be reached more easily within the display time "T", which is preferably always two months.

If the non-profit organization indicated on the list (for example, the non-profit organization immediately following a non-profit organization which has successfully completed its project) does not have active projects, the funds will go on to the next non-profit organization; if no non-profit organization forming part of the list has active projects, the sum of money 18b given by the donor 13 is assigned to a project with social aims with the earliest expiry date.

When the list of "n" non-profit organizations has been exhausted, the amount "S" is again transferred to the first non-profit organization (for example, "Action XX") indicated in the list (that is, to the non-profit organization which managed the first project selected).

This find-collection with conditions type 16 continues until one of the non-profit organizations 10 that is on the list (that is, either the non-profit organization responsible for managing the first project selected or the other "n" non-profit organizations indicated) fails to transfer the aggregated amount "S".

In fact if, for any reason, one of the non-profit organizations 10 fails to transfer the aggregated amount "S", the method may comprise one or more of the following further steps:
- indicating the failed transfer to the donors 13 by means of a third signal S3, the signal S3 being displayed by means of one of the sections 9a, 9b, 9c and/or 9d of the communication interface 9;
- modifying a reputation coefficient of the non-profit organization 10 which has not effected the transfer,

In other words, the non-profit organization 10 which does not transfer the aggregated amount "S" to the next non-profit organization listed may, in addition to being indicated by means of one of the above-mentioned sections of the communication interface 9, also be excluded from any other lists arranged by other donors 13,

If the "loan" fund-collection type 15 is selected by the donors 13 by means of the communication interface 9, the method may comprise, in addition to the steps already described with reference to the fund-collection type with conditions 16, also the step of selecting an interest rate within a permissible range of values proposed by the intermediary 11 or, alternatively, by the non-profit organization 10.

The interest rate depends on various factors such as, for example, the kind of social project selected, the sum of money 18b given, the historical capability of the non-profit organization to complete the projects put forward, etc.

It should be pointed out that the interest rate can be selected within a range of values which provides for an upper limit that is set, for example, by the non-profit organization 10, and a lower limit which may even be zero.

In particular, the upper limit corresponds to the maximum interest rate for that particular project having social aims. This maximum interest rate is selected by the non-profit organization 10 which manages the project. The donors 13 are given the facility to select the maximum interest rate indicated or any lower values.

The donor 13 selects the interest rate by means of a suitable section (not shown) of the communication interface 9.

If, on the other hand, the "contribution without conditions" fund-collection type 17 is selected by the donor 13 by means of the communication interface 9, the method may comprise the further steps of selecting a single project having social aims.

In this last scenario, the contribution without conditions 17 takes the form of a conventional donation.

The method of confirming the identity of the donor 13 may also comprise any one of the following further steps:
- providing personal data 23 of the donor 13;
- providing the donor 13 with a second data-processing form 22, the form authorizing the management of the donor's personal details, and
- storing the personal details of the donor/8 13 in the mass storage means which, for example, is located in the first server 6.

For example, the personal data 23 may comprise, in addition to forename, surname, and address, also tax identification number and/or VAT number.

The method may comprise the further step of assigning to the non-profit organization 10 a limit on the sum of money that can be received according to the budget capacity of the non-profit organization 10 and/or of its historical capability in completing the projects for which it has requested donations in the past.

For this purpose, the intermediary 11 sets a limit on the number of social projects 14a, 14b, 14c that can be financed (for example X times in one year) and the frequency (for example, Y times in a four-month period).

The method may comprise the further step of displaying on the communication interface 9 a merit index (not shown in the appended drawings) of the non-profit organization 10.

The merit index is suitable for devaluating the actual historical capability of the non-profit organization 10 to complete the projects for which it has requested contributions and, in general of the economic self-sustainability of the non-profit organization.

The merit index is calculated, for example, on the basis of operative parameters of the non-profit organization 10 such as, for example, human capital, values system and/or similar parameters and is, for example, assigned to a specialized rating company which is independent both of the non-profit organizations 10 and of the intermediary 11.

Naturally, in order to satisfy contingent and specific requirements, a person skilled in the art may apply to the above-described configurations many modifications and variations all of which, however, are included in the scope of protection of the invention as defined in the appended claims.

## Claims

1. A method of collecting funds for a non-profit organization (10) by means of a fund-collection program managed by an intermediary (11), the funds being given by at least one donor (13), the method comprising the steps of:
- storing one or more projects (14a, 14b, 14c) having social aims in a first server (6, 7) which is in signal communication with a computer network (5),
- providing a communication interface (9) which is in signal communication with the first server (6, 7) by means of the computer network (5), the interface (9) being configured to interact by means of one or more electronic devices (2, 3, 4) of the at least one donor (13),
- selecting, by means of the communication interface (9), at least one of the projects 14b, 14c) having social aims proposed by a first non-profit organization (10),
- receiving one or more sums of money (18b) given by the at least one donor (13) for the project (14a, 14b, 14c) having social aims selected, by means of the communication interface (9),
**characterized in that** it comprises the further steps of:
- aggregating the sums of money (18b) given by the at least one donor (13) for the selected project (14a, 14b, 14c) having social aims,
- checking whether the aggregated amount (S) of the sums of money is equal to or greater than a predetermined threshold value (Vth), and
- checking whether the predetermined threshold value (Vth) is reached within a predefined period of time (T).

2. A fund-collection method according to Claim I in which, if the aggregated amount of money (S) is equal to or greater than the predetermined threshold value (Vth) and if the predetermined threshold value (Vth) is reached within the period of time (T), then the method comprises the further step of sending a first signal (S1) to each of the at least one donor/s (13) and/or to the non-profit organization (10) and/or to the intermediary (11) to indicate that the threshold value (Vth) has been reached within the period of time (T).

3. A fundraising method according to Claim 1 in which, if the aggregated amount of money (S) is below the predetermined threshold value (Vth) by a value (Δ, Δ'), which is preferably equal to no more than 30%, and/or if the predetermined threshold value (Vth) is not reached within the period of time (T), then the method comprises the further step of sending a second signal (S2, S2') to each donor (13) and/or to the non-profit organization (10) and/or to the intermediary (11) to indicate failure to reach the threshold value (Vth) within the period of time (T).

4. A fund-collection method according to Claim 1, comprising the further step of creating at least one account that can be associated with one or more of the projects (14a, 14b, 14c) having social aims, the at least one account being stored in the first server (6, 7).

5. A fund-collection method according to Claims 2 and 4, comprising the further step of transferring the aggregated amount of money (S), by means of the computer network (5), to the at least one account associated with the selected project (14a, 14b, 14c) having social aims.

6. A fund-collection method according to Claims 3 and 4, comprising the further step of returning the aggregated amount of money (S) received, breaking it up into the sums of money (18b) given by each of the at least one donor/s (13).

7. A fund-collection method according to Claim 1, comprising the further step of
- providing at least one identification code (20) of an electronic cash medium of the donor (13), the at least one identification code (20) being provided by means of the computer network (5), between the first server (6) and a second server (7), the identification data (20) of the electronic cash medium being stormed in the second server (6, 7).

8. A fund-collection method according to Claim 1, comprising the step of selecting, by means of the communication interface (9), a fund-collection type (15, 16, 17) from a plurality of types for financing the one or more projects (14a, 14b, 14c), wherein the fund-collection type (15, 16, 17) comprises a contribution with conditions fund-collection type (16), wherein, upon the selection of that type, the method comprises the further steps of:
- selecting a plurality ("n") of non-profit organizations (10) in addition to the first non-profit organization which is responsible for managing the project (14a, 14b, 14c) having social aims already selected,
- creating a list which contains the project (14a, 14b, 14c) having social aims already selected and managed by the first non-profit organization (10) and which contains a plurality "n" of further selected non-profit organizations.

9. A fund-collection method according to Claim 8 in which, once the selected project (14a, 14b, 14c) having social aims is competed, the method comprises the step of' crediting the aggregated amount (S) to another account which can be associated with a non-profit organization that is present in the plurality "n" of further non-profit organizations, following the first non-profit organization (10).

10. A fund-collection method according to Claim 8 or Claim 9 in which, in the event of a failure to transfer the aggregates amount (S) into the other account associated with the following non-profit organization, the method comprises the further steps of:
- sending a third signal (S3) to the at least one donor (13) to indicate the failed transfer,
- modifying a reputation coefficient of the non-profit organization which has tailed to transfer the aggregated amount (S).

11. A fund-collection method according to Claim 1 in which the predetermined threshold value (Vth) is determined in dependence on the economic value of the selected project having social aims.

12. A fund-collection method according to Claim 1 in which the predefined period of time (T) is equal to or less than two months.

13. A fund-collection method according to Claim 1, comprising the further steps of:
- providing personal data (21) of the donor (13),
- providing the donor (13) with a second data-processing form (22), the form authorizing the management of the personal data (21) of the donor (13),
- storing the personal data (21) in the first server (6).

14. A fund-collection method according to Claim 1, comprising the further step of displaying in the communication interface (9) a merit index, the merit index being calculated on the basis of operative parameters of the non-profit organization (10).

15. A fund-collection method according to Claim 8 in which the plurality of fund-collection types for financing the one or more projects having social aims further comprises:
- a "loan" fund-collection type (15) and/or
- a "contribution without conditions" fund-collection type (17).

16. An information technology product which can be loaded directly into the memory of a digital processing device, and which comprises portions of program code that can implement the method according to any one of Claims 1 to 15 when executed on the processing device.

17. A system for collecting funds for a non-profit organization (10) by means of a fund-collection program managed by an intermediary (11), the funds (18b) being given by at least one donor (13), the system comprising:
- a communication interface (9) which is in signal communication with a first server (6) by means of a computer network (5), the interface (9) being configured to interact by means of one or more electronic devices (2, 3, 4) of the at least one donor (13),
- the first server (6) comprising first storage means (8) suitable for storing information relating to one or more projects (14a, 14b, 14c) having social aims, managed by at least one non-profit organization (10), and at least one processor,
**characterized in that** the first server (6) is configured to implement the information technology product according to Claim 16.

18. A fund-collection system according to Claim 17, comprising a second server (7) having second storage means suitable for storing information relating to an identification code (20) of an electronic cash medium registered to the donor (13), the second server (7) being in signal communication with the first server (6) in order to exchange data by means of the computer network (5) in a cryptographic manner.

19. A fund-collection system according to Claim 1 in which the data of at least one account which can be associated with one or more projects of the projects (14a, 14b, 14c) having social aims is stored in the first mass storage means of the first server (6).

20. To fund-collection system according to Claim 17 in which the computer network (5) is the Internet.

21. A fund-collection system according to Claim 17 in which the communication interface (9) comprises a first section (9c) for indicating the sum of money (18b) given by the donor (13), a second section (9a) for displaying the projects (14a, 14b, 14c) having social aims which can be selected by the donor (13) and/or a third section (9b) for displaying the types of contribution (15, 16, 17) provided for.

22. A fund-collection system according to Claim 17 or Claim 21 in which the communication interface (9) comprises a fourth section (9d) for displaying information (9d', 9d", 9d"') relating to the state of the donation types (15, 16; 17) of the selected projects (14a, 14b, 14c) having social aims.
